# EUROPÄISCHE PATENTSCHRIFT

(11) **EP 1 429 445 B1**
(45) Veröffentlichungstag und Bekanntmachung des Hinweises auf die Patenterteilung: **12.08.2009**
(21) Anmeldenummer: 03104521.4
(22) Anmeldetag: 03.12.2003
(51) Int. Cl.: H01L 41/04, F02D 41/20

(54) **Verfahren und Anordnung zum Ansteuern eines piezoelektrischen Aktors**
Method and device for controlling a piezoelectric actuator
Procédé et dispositif de commande d'un actionneur piézoélectrique

(30) Priorität: 09.12.2002 DE 10257467
(43) Veröffentlichungstag der Anmeldung: 16.06.2004
(73) Patentinhaber: Continental Automotive GmbH, 30165 Hannover (DE)
(72) Erfinder: Bloching, Wolfgang, 88085, Langenargen (DE); Schrod, Walter, 93057, Regensburg (DE); Weigl, Manfred, 93161, Viehhausen (DE); Wolpert, Hartmut, 93197, Zeitlarn (DE); Zumstrull, Claus, 93128, Regenstauf (DE); Friedrich, Arno, 93047, Regensburg (DE); Graichen, Andreas, 09232, Hartmannsdorf (DE); Heinek, Andreas, 01782, Bannewitz (DE); Hoffmann, Christian, 93057, Regensburg (DE); Klügl, Wendelin, 92358, Seubersdorf (DE); Kroemer, Nils, 09337, Hohenstein-Ernstthal (DE); Larisch, Benno, 92421, Schwandorf (DE); Schmutzler, Gerd, 93138, Kareth (DE)

(56) Entgegenhaltungen:
- WO-A-00/45046
- WO-A-02/092985
- WO-A-03/052260
- DE-A1- 10 011 421
- DE-A1- 10 130 857
- DE-A1- 19 905 340

## Beschreibung

Die Erfindung betrifft ein Verfahren und eine Anordnung zum Ansteuern eines piezoelektrischen Aktors, insbesondere eines durch einen piezoelektrischen Aktor betriebenen Hochdruckeinspritzventils einer Brennkraftmaschine.

Piezoelektrische Keramiken bestehen beispielsweise aus Bleizirkonat-Titanat-Keramiken. Ein piezoelektrischer Aktor weist einen Stapel aufeinanderliegender Piezoelemente auf, der beim Beaufschlagen mit einer Spannung schnell seine Länge um eine u. a. von der Spannung abhängige Strecke verändert. Vor allem die Änderungsgeschwindigkeit und die hohen Kräfte machen die piezoelektrische Keramik für den Einsatz bei Einspritzventilen interessant.

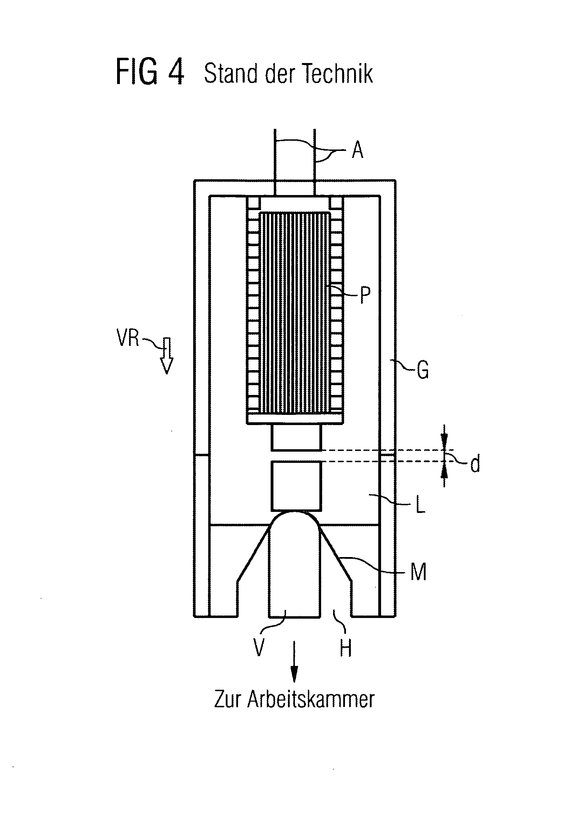

In Figur 4 ist ein Hochdruckeinspritzventil einer Brennkraftmaschine schematisch dargestellt, bei dem das Ventil im dargestellten Zustand geschlossen ist. Die Arbeitskammer des Hochruckeinspritzventils ist hier nicht dargestellt. Der piezoelektrische Aktor P weist zwei Anschlüsse A auf und ist von einem Gehäuse G umgeben.

Wird nun eine positive Spannung an den Anschlüssen A des piezoelektrischen Aktor P angelegt, so verlängert sich der Aktor P in Richtung der Vorzugspolarisierung der piezoelektrischen Keramik (siehe Pfeil VR in Figur 4). Das Hochdruckeinspritzventil weist einen Spalt d auf, der als Sicherheitsabstand für thermische Längenänderungen der Piezokeramik dient. Dieser Spalt d weist typischerweise ein Maß zwischen 3 und 5 µm auf.

Das hier dargestellte Hochdruckventil weist einen Niederdruckbereich L und einen Hochdruckbereich H auf, die durch eine Membran M getrennt werden.

Treten nun am piezoelektrischen Aktor P aufgrund von widrigen Umgebungseinflüssen Längenänderungen auf, die über das Maß dieses Spaltes d hinaus gehen, so drückt der piezoelektrische Aktor P bereits im Ruhezustand gegen den Ventilsitz V, was letztendlich zu einer Leckage am Ventil führen kann. Aufgrund dieser Leckage kann dann in einem Druckspeicher und in dem von diesem versorgten Hochdruckbereich H kein für die Funktion der Brennkraftmaschinen notwendiger Druck aufgebaut werden, was dazu führt, dass die Brennkraftmaschine versagt.

Aus der Patentschrift DE 199 05 340 C2 ist ein Verfahren und eine Anordnung zur Voreinstellung und dynamischen Nachführung piezoelektrischer Aktoren bekannt. Hier wird der gepulsten Ansteuerspannung ein Gleichspannungssignal überlagert. Dieses Gleichspannungssignal bewirkt eine Längenänderung des piezoelektrischen Aktors sowohl in positiver, als auch in negativer Richtung. Auf diese Weise können temperaturbedingte Längenänderungen kompensiert werden.

Soll in einem solchen Zustand die Brennkraftmaschine gestartet werden, beispielsweise nach einem vorangegangenen längeren Betrieb mit nachfolgendem Abstellen der Brennkraftmaschine, so kann aufgrund der Freisetzung von Kraftstoff aus dem Steuerraum in eine Leckageleitung ein Druckaufbau im Druckspeicher und somit auch im Hochdruckbereich H erheblich erschwert oder verzögert werden. Der Aufbau eines gewissen Mindestsystemdrucks, der typischerweise einige 100 bar beträgt, ist jedoch notwendig, um überhaupt eine Einspritzung zu ermöglichen.

Weiter ist eine Aktorsteuerung und ein zugehöriges Verfahren bekannt (DE 100 63 080 A1), bei dem die Ladung des Aktors in Abhängigkeit von der Temperatur des Aktors eingestellt wird, um temperaturbedingte Schwankungen des Aktorhubs zu vermeiden.

Auch ist eine Steuerschaltung für einen piezoelektrischen Aktor bekannt (US 5,387,834 A), bei der die Ansteuerzeiten eines Schalttransistors in einem Speicher als Funktion einer Temperatur hinterlegt sind.

Aufgabe der Erfindung ist es, ein Verfahren und eine Anordnung zum Ansteuern eines piezoelektrischen Aktors zu schaffen, die es auf einfache Weise erlauben, falls die Länge des piezoelektrischen Aktors aufgrund eines abweichenden Systemverhaltens eine maximal zulässige Länge überschreitet, diese durch Ansteuerung mit einer negativen Spannung auf eine zulässige Länge zu reduzieren.

Diese Aufgabe wird erfindungsgemäß durch ein Verfahren mit den im Patentanspruch 1 und durch eine Anordnung mit den im patentanspruch 4 angegebenen Merkmalen gelöst.

Das erfindungsgemäße Verfahren löst die Aufgabe dadurch, dass zunächst zumindest eine physikalisch Messgröße, nämlich die Temperatur des Aktors, die von der aktuellen Länge des piezoelektrischen Aktors abhängt, erfasst und ausgewertet wird. Anschließend wird der piezoelektrische Aktor abhängig von dieser Größe, falls seine ermittelte Länge größer als eine vorbestimmte Maximallänge ist, mit einer negativen Spannung beaufschlagt.

Hier wird der piezoelektrische Effekt so genutzt, dass die piezoelektrische Keramik beim Beaufschlagen mit einer negativen Spannung ihre Länge ebenfalls um eine festgelegte Strecke verringert.

Die erfindungsgemäße Anordnung weist eine Spannungsquelle, eine Endstufe, eine Ansteuervorrichtung, eine Steuereinheit und zumindest einen piezoelektrischen Aktor auf.

Die Spannungsquelle dient sowohl zur Energieversorgung der Endstufe, die den piezoelektrischen Aktor ansteuert, als auch zur Energieversorgung der Ansteuervorrichtung.

Die Steuereinheit erfasst die Temperatur des Aktors, die Aufschluss über die aktuelle Länge des zumindest einen piezoelektrischen Aktors gibt. In Abhängigkeit von dieser Messgröße steuert die Steuereinheit die Ansteuereinheit an. Überschreitet die Messgröße einen vorbestimmten Schwellenwert, so wird nun der zumindest eine piezoelektrische Aktor über die Ansteuervorrichtung mit einer negativen Spannung beaufschlagt. Aufgrund dieser negativen Spannung verkürzt sich der piezoelektrische Aktor.

Durch das erfindungsgemäße Verfahren und die erfindungsgemäße Anordnung können temperaturbedingte Längenänderungen des piezoelektrischen Aktors auf einfache Weise ausgeglichen werden, ohne dass Änderungen am piezoelektrischen Aktor selbst, oder am Gesamtsystem vorgenommen werden müssen.

Auch wird durch die kurzzeitige Ansteuerung des piezoelektrischen Aktors mit einer negativen Spannung der piezoelektrischen Keramik bzw. deren Polarisation kein Schaden zugefügt.

Bevorzugte Ausführungsformen der Erfindung sind in den Unteransprüchen angeführt.

Mehrere Ausführungsbeispiele des erfindungsgemäßen Verfahrens und der Anordnung werden im Folgenden anhand der schematischen Zeichnungen näher erläutert. Es zeigen:
- Figur 1: ein Blockschaltbild eines Ausführungsbeispiels einer erfindungsgemäßen Anordnung,
- Figur 2: ein Ablaufdiagramm, das die Schritte eines Ausführungsbeispiels eines erfindungsgemäßen Verfahrens wiedergibt,
- Figur 3: ein Ausführungsbeispiel einer elektrischen Schaltung einer Ansteuereinheit und
- Figur 4: ein Hochdruckeinspritzventil einer Brennkraftmaschine, das einen piezoelektrischen Aktor aufweist.

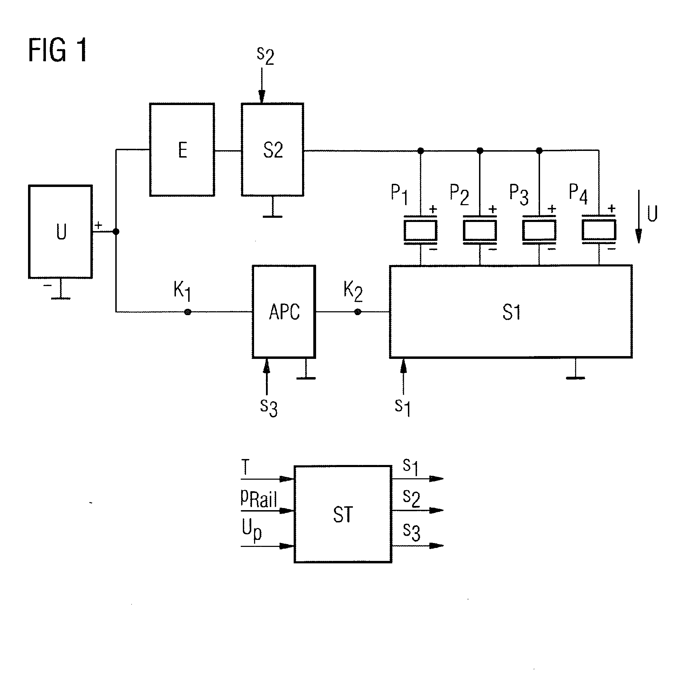

Figur 1 zeigt ein Ausführungsbeispiel einer erfindungsgemäßen Anordnung, die vier piezoelektrische Aktoren P (=P1, P2, P3 und P4) aufweist. Diese piezoelektrischen Aktoren P sind mit einem ersten Anschluss (negativer Pol) mit einer ersten elektrischen Schalteinheit S1 elektrisch verbunden und mit einem zweiten Anschluss (positiver Pol) elektrisch miteinander und mit einer zweiten Schalteinheit S2 elektrisch verbunden.

Die einzelnen Aktoren P können auch über einzelne elektrische Verbindungen mit der Schalteinheit S2 verbunden sein.

Des Weiteren weist die Anordnung eine Spannungsquelle U, eine Endstufe E, sowie eine Ansteuervorrichtung APC und eine Steuereinheit ST auf.

Die gemeinsame Spannungsquelle U versorgt sowohl die Endstufe E, als auch die Ansteuervorrichtung APC mit Energie.

Die Endstufe E zum Laden und Entladen der Aktoren P ist mit der zweiten Schalteinheit S2 elektrisch verbunden. Die Ansteuervorrichtung APC ist einerseits über einen Knoten K1 mit der Spannungsquelle U und andererseits über einen Knoten K2 mit der ersten Schalteinheit S1 elektrisch verbunden.

Die Endstufe E wird von einer nicht dargestellten Steuereinheit mit Steuersignalen versorgt, die angeben, welchem Aktor eine bestimmte Energiemenge zugeführt werden soll. Alternativ kann die Endstufe E jedoch auch von der Steuereinheit ST angesteuert werden.

Im Normalbetrieb wird der Aktor P so angesteuert, dass er sich aufgrund der an den Anschlüssen A angelegten Spannung (positive Spannung) in Richtung der Vorzugspolarisation VR ausdehnt. Wird nun ein zu langer Aktor detektiert, so wird dieser mit einer im Vergleich zum Normalbetrieb negativen Spannung beaufschlagt.

Die Steuereinheit ST weist drei Eingänge - Tₚ, pᵣₐᵢₗ und Uₚ - und drei Ausgänge - s₁, s₂ und s₃ - auf. Abhängig von einem oder mehreren Eingangssignalen steuert diese Steuereinheit ST die Ansteuervorrichtung APC, die erste Schalteinheit S1 und/ oder die zweite Schalteinheit S2 an. Alternativ kann die Steuereinheit ST auch die Endstufe E ansteuern.

Über die erste Schalteinheit S1 können die piezoelektrischen Aktoren P abhängig von einem Steuersignal s₁ einzeln oder gemeinsam mit Masse oder mit der Ansteuervorrichtung APC elektrisch verbunden werden.

Über die Schalteinheit S2 werden die piezoelektrischen Aktoren P abhängig von einem Steuersignal s₂ entweder mit der Endstufe E oder mit Masse elektrisch verbunden. Auch hier ist alternativ eine Ansteuerung einzelner Aktoren P denkbar.

Als Eingangsgrößen der Steuereinheit ST werden in diesem Ausführungsbeispiel ein Druck p_{Rail} in einem (nicht dargestellten) Druckspeicher, eine Temperatur T der piezoelektrischen Aktoren P und/ oder eine über den Aktoren P abfallende Spannung Uₚ herangezogen. Abhängig von diesen Eingangsgrößen erzeugt die Steuereinheit ST entsprechende Ausgangssignale s1, s2 und/ oder s3.

Der Druckspeicher (Rail) versorgt einen Hochdruckbereich (vgl. Bezugszeichen H, Figur 4) mit einem unter Druck stehenden Medium, beispielsweise einer Flüssigkeit. Überschreitet die Länge des Aktors P nun eine maximal zulässige Länge, so kann sowohl im Druckspeicher als auch im Hochdruckbereich H kein Druck aufgebaut werden. Dies führt im hier aufgezeigten Ausführungsbeispiel dazu, dass die Brennkraftmaschine nicht gestartet werden kann.

Als Maß für die Überschreitung der maximal zulässigen Länge wird die Temperatur T des Aktors herangezogen. Man kann dann davon ausgehen, dass ab einer bestimmten Temperaturschwelle T_{Schwelle} der Aktor P die maximal zulässige Länge überschreitet.

Beim Betrieb der Brennkraftmaschine bedeutet diese Überschreitung der maximal zulässigen Länge eine Öffnungstendenz des vom Aktor P angesteuerten Einspritzventils V, selbst wenn dieses nicht aktiv elektrisch über die Anschlüsse A angesteuert wird. Für den Fall eines "Heißstarts" der Brennkraftmaschine bedeutet dies, dass der Druckaufbau im Druckspeicher (Rail) nicht oder nicht rasch in einem Ausmaß aufgebaut werden kann, das für den Beginn der Kraftstoffeinspritzung erforderlich ist.

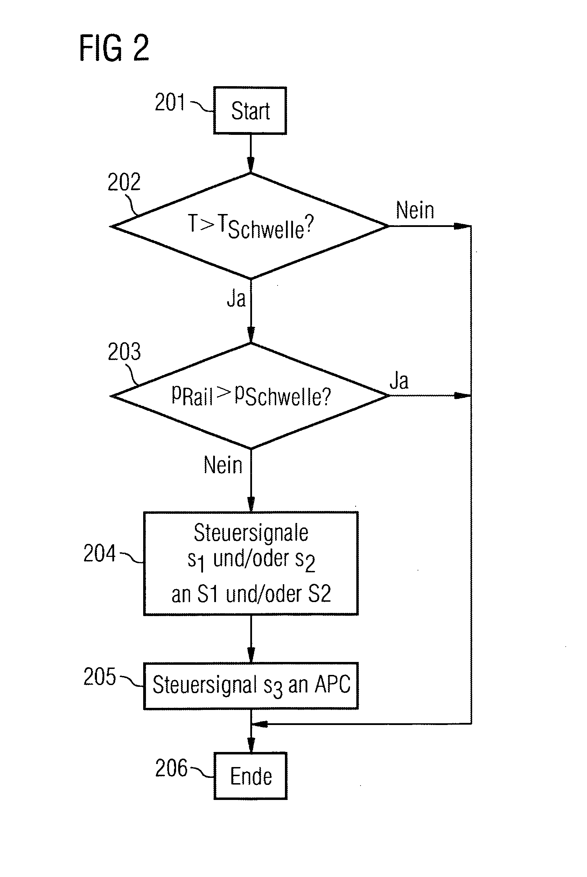

Ein Ablaufdiagramm eines Ausführungsbeispiels des erfindungsgemäßen Verfahrens ist in Figur 2 dargestellt. In Schritt 201 wird das Verfahren gestartet und im Anschluss daran wird in Schritt 202 überprüft, ob die Temperatur T eines oder mehrer piezoelektrischer Aktoren P eine bestimmte Schwellentemperatur T_{Schwelle} überschreitet.

Abhängig vom Ergebnis dieses Vergleichs wird entweder zum Ende dieses Verfahrens verzweigt (Schritt 206) oder es wird nach Schritt 203 verzweigt.

Ein Überprüfen der Aktortemperatur T bietet den Vorteil, dass einer temperaturbedingten Längenänderung des piezoelektrischen Aktors ohne eine für den Benutzer merkliche Zeitverzögerung entgegengewirkt werden kann.

In Schritt 203 wird nun der Druck p_{Rail} in dem Druckspeicher mit einem vorgegebenen Schwellenwert p_{Schwelle} verglichen. Ist der Druck p_{Rail} größer als der vorgegebenen Schwellenwert p_{Schwelle}, so wird zum Ende des Verfahrens verzweigt, da der piezoelektrische Aktor ordnungsgemäß arbeitet und das vom Aktor P angesteuerte Ventil keine Leckage aufweist.

Kann jedoch kein genügend großer Druck p_{Rail} im Druckspeicher aufgebaut werden, so werden in Schritt 204 von der Steuereinheit zwei Steuersignale s₁ und s₂ erzeugt. Das Steuersignal s₁ bewirkt, dass die Schalteinheit S1 die Ansteuervorrichtung APC mit dem negativen Anschluss des oder der Aktoren P verbindet. Das Steuersignal s₂ bewirkt, dass die Schalteinheit S2 die positiven Anschlüsse der Aktoren P mit Masse verbindet.

Nun wird in Schritt 205 ebenfalls von der Steuereinheit ST ein Steuersignal s₃ erzeugt, aufgrund dessen die Ansteuervorrichtung APC die negativen Anschlüsse der Aktoren über die Schalteinheit S1 mit einer positiven Spannung beaufschlagt, wodurch die Aktoren P negativ aufgeladen werden und die Länge der Aktoren dadurch verringert wird, bevor dann das erfindungsgemäße Verfahren im Schritt 206 beendet wird.

Wird nur an einem piezoelektrischen Aktor P eine unzulässige Temperatur und/ oder ein unzureichender Druck detektiert, so kann auch nur dieser mit einer negativen Spannung beaufschlagt werden.

Eine zur negativen Ansteuerung typische Spannung liegt bei circa 20 Volt. Da die Spannungsquelle U üblicherweise eine höhere Spannung, meist in einem Bereich zwischen 60 und 80 Volt, zur Verfügung stellt, kann die Ansteuervorrichtung APC eine Spannungsbegrenzung enthalten.

Um die Länge der piezoelektrischen Aktoren P soweit zu reduzieren, dass diese kleiner als die maximal zulässige Länge ist, werden die Aktoren P so lange von der Ansteuervorrichtung APC mit einer negativen Spannung beaufschlagt, bis ein bestimmtes Ereignis eintritt.

Dieses Ereignis kann beispielsweise eine vorgegebene Zeitdauer sein, beispielweise die Dauer einer Umdrehung der Brennkraftmaschine oder eine maximale Dauer von beispielweise 2,5 s.

Alternativ kann überwacht werden, ob der Druck pᵣₐᵢₗ eine vorgegebene Schwelle p_{Schwelle} überschreitet oder ob ein Startvorgang der Brennkraftmaschine erfolgreich ist.

Sobald ein Druckaufbau im Hochdruckbereich H möglich ist, kann die negative Spannung am piezoelektrischen Aktor P abgeschaltet werden, da dieser Druck dann das Ventil geschlossen hält.

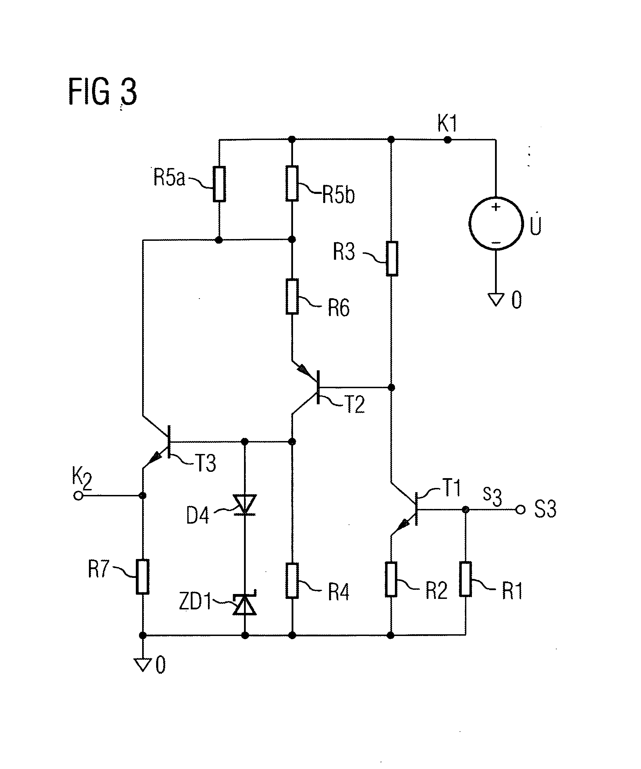

Figur 3 zeigt ein Ausführungsbeispiel einer Schaltungsanordnung, die als Ansteuereinheit APC dient. Die Schaltungsanordnung ist über den ersten Knoten K1 mit der Spannungsquelle U und über den Knoten K2 mit der ersten Schalteinheit S1 (Fig. 1) verbunden. Die Schaltungsanordnung weist weiter einen Eingang S3 auf, an dem sie von der Steuereinheit ST mit dem Einschaltsignal s₃ beaufschlagt wird.

Dieser Eingang S3 ist mit der Basis eines ersten Transistors T1 verbunden. Die Basis ist weiter über einen Widerstand R1 mit Masse verbunden. Der Transistor T1 ist hier vorzugsweise ein npn-Transistor, dessen Emitter über einen zweiten Widerstand R2 mit Masse verbunden ist. Der Kollektor des Transistors T1 ist über einen Widerstand R3 mit dem Knoten K1 verbunden.

Ein zweiter Transistor, hier vorzugsweise ein pnp-Transistor ist mit seinem Basisanschluss mit dem Kollektor des Transistors T1 verbunden. Der Emitter des Transistors T2 ist über einen Widerstand R6 und eine Parallelschaltung der Widerstände R5a und R5b ebenfalls mit dem Knoten K1 verbunden. Der Kollektor des Transistors T2 ist zum einen über einen Widerstand R4 mit Masse verbunden und zum anderen mit der Basis eines weiteren Transistors T3, hier ein npn-Transistor.

Der Kollektor des Transistors T2 und somit auch die Basis des Transistors T3 sind mit der Anode einer Diode D4 verbunden. Der Kathodenanschluss der Diode D4 ist mit der Kathode einer Zehnerdiode ZD1 verbunden, deren Anode mit Masse verbunden ist. Der Emitter des Transistors T3 ist zum einen mit dem Knoten K2 und zum anderen über einen Widerstand R7 mit Masse verbunden. Der Kollektor des Transistors T3 ist mit dem Verbindungspunkt des Widerstands R6 mit der Parallelschaltung der Widerstände R5a und R5b verbunden.

Wird nun von der Steuereinheit ein Einschaltsignal S3 gesendet, so schaltet der Transistor T1 durch wodurch auch die Transistoren T2 und T3 durchschalten und somit der Knoten K2 über die Parallelschaltung der Widerstände R5a und R5b mit dem positiven Pol der Spannungsquelle U verbunden werden.

Fällt nun an Widerstand R7 eine Spannung ab, die größer als die Arbeitsspannung der Zehnerdiode ZD1 ist, so schaltet der Transistor T3 aus, wodurch die Spannung am Knoten K2 begrenzt wird.

## Patentansprüche

1. Verfahren zum Ansteuern eines piezoelektrischen Aktors zum Betreiben eines Hochdruckeinspritzventils einer Brennkraftmaschine, das die folgenden Verfahrensschritte aufweist:
- Erfassen und Auswerten zumindest einer physikalischen Messgröße (T, P_{Rail}, Uₚ), die Aufschluss über die aktuelle Länge des piezoelektrischen Aktors (P) gibt,
- Überprüfen, ob die Messgröße einen vorbestimmten Schwellenwert über- oder unterschreitet und Ansteuern des piezoelektrischen Aktors (P) im Ruhezustand in Abhängigkeit von dieser Überprüfung mit einer Spannung, die eine Längenänderung des Aktors (P) zur Folge hat, die der Über- oder Unterschreitung entgegenwirkt, und
- Abschalten der Spannung, sobald die Länge des Aktors (P) einen vorgegebenen Wert erreicht hat oder nach einer vorgegebenen Zeitdauer,
**dadurch gekennzeichnet,**
- **dass** zur Vermeidung eines Versagens der Brennkraftmaschine bei deren Start bereits vor dem Starten der Brennkraftmaschine die Temperatur (T) des Aktors (P) als die physikalische Messgröße (T, P_{Rail}, Uₚ) verwendet wird und
- der Aktor (P) beim Starten der Brennkraftmaschine angesteuert wird, falls die Temperatur (T) einen vorgegebenen Schwellwert (T_{Schwelle}) überschreitet.

2. Verfahren nach Anspruch 1, **dadurch gekennzeichnet, dass** bereits vor dem Starten der Brennkraftmaschine als weitere physikalische Messgröße ein Druck (p_{Rail}) in einem Hochdruckbereich (H) verwendet wird und der Aktor (P) beim Starten der Brennkraftmaschine angesteuert wird, falls dieser einen vorgegebenen Schwellwert (p_{Schwelle}) unterschreitet.

3. Verfahren nach einem der Ansprüche 1 oder 2, **dadurch gekennzeichnet, dass** die Spannung, mit der der piezoelektrische Aktor (P) angesteuert wird, eine negative Gleichspannung ist.

4. Anordnung zum Ansteuern eines piezoelektrischen Aktors zum Betreiben eines Hochdruckeinspritzventils einer Brennkraftmaschine, umfassend Mittel (U, ST, E, S1, S2) zur Ausführung eines Verfahrens nach einem der Ansprüche 1 bis 3,
**dadurch gekennzeichnet, dass**
die Vorrichtung eine Steuereinheit (ST) aufweist, die in Abhängigkeit von zumindest der Temperatur des Aktors als Eingangsgröße zumindest ein Steuersignal erzeugt, das eine Ansteuervorrichtung (APC) steuert, die den piezoelektrischen Aktor gegebenenfalls mit einer negativen Spannung beaufschlagt.

5. Brennkraftmaschine, die eine Anordnung gemäß Anspruch 4 aufweist.

## Claims

1. Method for activating a piezoelectric actuator for operating a high pressure injection valve in an internal combustion engine, which comprises the following method steps:
- detecting and evaluating at least one physical measured variable (T, P*_{Rail}*, U*ₚ*), which provides information on the current length of the piezoelectric actuator (P),
- checking whether the measured variable exceeds or does not meet a predetermined threshold value and activating the piezoelectric actuator (P) when idling as a function of this check using a voltage which results in a change in length of the actuator (P), which counteracts the exceedance or shortfall, and
- disconnecting the voltage as soon as the length of the actuator (P) has reached a predetermined value or after a predetermined period of time,
**characterised in that**
- the temperature (T) of the actuator (P) is used as the physical measured variable (T, P*_{Rail}*, U*ₚ*), in order to avoid a malfunction of the internal combustion engine during its start-up, even before starting the internal combustion engine and
- the actuator (P) is activated when starting up the internal combustion engine if the temperature (T) exceeds a predetermined threshold value (T*_{Threshold}*).

2. Method according to claim 1, **characterized in that** even before starting up the internal combustion engine, a pressure (p*_{Rail}*) in a high pressure region (H) is used as an additional physical measured variable and the actuator (P) is activated when starting up the internal combustion engine if this does not reach a predetermined threshold value (p*_{Threshold}*).

3. Method according to one of claims 1 or 2, **characterized in that** the voltage, with which the piezoelectric actuator (P) is activated, is a negative direct current.

4. Arrangement for activating a piezoelectric actuator for operating a high pressure injection valve in an internal combustion engine, comprising means (U, ST, E, S1, S2) for implementing a method according to one of claims 1 to 3,
**characterised in that**
the apparatus has a control unit (ST), which generates at least one control signal as an input variable as a function of at least the temperature of the actuator, said control signal controlling an activation apparatus (APC), which applies the piezoelectric actuator with negative voltage if necessary.

5. Internal combustion engine, which comprises an arrangement according to claim 4.

## Revendications

1. Procédé de commande d'un actionneur piézo-électrique destiné à faire fonctionner un injecteur à haute pression d'un moteur à combustion interne, ce procédé présentant les étapes suivantes :
- capter et exploiter au moins une grandeur de mesure physique (T, P_{Rail}, Uₚ) qui fournit une indication de la longueur instantanée de l'actionneur piézo-électrique (P),
- vérifier si la grandeur de mesure dépasse vers le haut ou vers le bas une valeur de seuil prédéterminée et commander l'actionneur piézo-électrique (P) à son état de repos en fonction de cette vérification avec une tension ayant pour conséquence une variation de longueur de l'actionneur (P) s'opposant au dépassement vers le haut ou vers le bas, et
- ôter la tension dès que la longueur de l'actionneur (P) a atteint une valeur prédéterminée ou après un intervalle de temps prédéterminé,
**caractérisé**
- **en ce que** pour éviter une défaillance du moteur à combustion interne lors de sa mise en marche, on utilise déjà avant cette mise en marche du moteur à combustion interne, la température (T) de l'actionneur (P) en tant que grandeur de mesure physique (T, P_{Rail}, Uₚ) et
- **en ce que**, lors de la mise en marche du moteur à combustion interne, l'actionneur (P) est commandé au cas où la température (T) dépasse une valeur de seuil prédéterminée (T_{Schwelle}).

2. Procédé selon la revendication 1, **caractérisé en ce que** déjà avant la mise en marche du moteur à combustion interne, on utilise en tant que grandeur de mesure physique supplémentaire une pression (p_{Rail}) dans le domaine des hautes pressions (H) et on commande l'actionneur (P) lors de la mise en marche du moteur à combustion interne au cas où cette grandeur dépasse vers le bas une valeur de seuil prédéterminée (p_{chwelle}).

3. Procédé selon l'une des revendications 1 ou 2, **caractérisé en ce que** la tension avec laquelle l'actionneur piézo-électrique (P) est commandé, est une tension continue négative.

4. Dispositif pour commander un actionneur piézo-électrique pour faire fonctionner un injecteur à haute pression d'un moteur à combustion interne, comprenant des moyens (U, ST, E, S1, S2) pour mettre en oeuvre un procédé selon l'une des revendications 1 à 3, **caractérisé en ce qu'**il comprend une unité de commande (ST) qui engendre au moins un signal de commande en fonction d'au moins la température de l'actionneur en tant que grandeur d'entrée, le signal de commande commandant un dispositif de commande (APC) qui, le cas échéant, applique une tension négative à l'actionneur piézo-électrique.

5. Moteur à combustion interne comprenant un dispositif selon la revendication 4.
